# EUROPEAN PATENT APPLICATION

(11) **EP 0 858 201 A2**
(43) Date of publication of application: **12.08.1998**
(21) Application number: 98300816.0
(22) Date of filing: 04.02.1998
(51) Int. Cl.: H04L 29/06, H04L 12/14

(54) **Method and apparatus for allowing secure transactions through a firewall**

(30) Priority: 06.02.1997 US 38825 P; 23.01.1998 US
(71) Applicant: Sun Microsystems Inc., Palo Alto, California 94303-4900 (US)
(72) Inventor: Maritzen, Lynn M., Fremont, California 94539 (US); Wescott, Carl A., Guerneville, California 95446-0079 (US)
(74) Representative: Browne, Robin Forsythe, Dr.

(57) **Abstract**

A method, software, and an apparatus for allowing secure transactions to be made on a computer network through a firewall are disclosed. In accordance with one aspect of the present invention, an electronic data transfer system for transmitting a message between a first computer system, arranged within a firewall, and a second computer system which is in communication with the first computer system across a computer network includes a translator mechanism which is effective to identify messages that are encoded in a first format that is suitable for transmission across the network, but is not suitable for transmission across the firewall. In one embodiment, the translator mechanism includes a first interceptor mechanism that is configured to translate a selected message sent from the first computer system in the first format into the second format that is appropriate for transmission across the firewall.

## Description

### BACKGROUND OF THE INVENTION

### 1. Field of Invention

The present invention relates generally to methods, software, and apparatus for communicating across computer networks, and, more particularly, computer networks including firewall security devices. In one aspect, the present invention relates to methods, software, and apparatus for use in electronic commerce systems, and more particularly, to methods and apparatus for allowing secure transactions on a computer network to be made through a firewall.

### 2. Description of the Relevant Art

The use of the Intemet, the well-known international computer network that links various military, governmental, educational, nonprofit, industrial and financial institutions, commercial enterprises, and individuals, for conducting business is becoming ever more prevalent. In particular, electronic commerce, the paperless exchange of transaction information using electronic transport, on the Intemet is being used as a means for the exchange of goods, services, and money. Thus, users of the Internet are purchasing an ever-growing variety of goods and services "on-line." Examples of goods and services being transacted on the Internet range from groceries and flowers to software and banking services.

Organizations which use both the Internet and an intranet system, *i.e.,* a network internal to an organization, typically make a distinction between Internet commerce and intranet commerce. This is due, in part, to the fact that many organizations which are involved with the Intemet prefer the security of having an intranet which is mostly inaccessible to customers on the Internet. Typically, the intranet and the organization's interface with the Intemet will include one or more "World Wide Web pages," *i.e.,* pages of text and graphics created using HyperText Mark-up Language (HTML) and, increasingly, the Java programming language (available commercially from Sun Microsystems of Mountain View, California), that allow users to view, hear, and enter data dynamically.

An organization that uses both the Internet and an intranet system will usually have redundant "Web pages" or other data-entry systems to separate the secure information on the local intranet from the largely uncontrolled environment of the Internet. For example, one Web page will be associated with the intranet system and a separate, essentially identical, Web page will be associated with the corresponding Internet system. Alternatively, information obtained from the Internet through the company Web page will be disseminated by hand to other users within the company, *e.g.,* by typing the information into separate databases or by filling out various forms by hand. This redundancy generally requires separate sets of physical hardware, *e.g.,* computers, network devices, database servers and data storage devices, for both the Internet and the intranet system. Thus, in addition to requiring the additional expense of establishing and maintaining separate sets of hardware, the maintenance of separate databases leads to complications which include the need for entry of redundant data into separate databases. By way of example, a credit card number entered into an "Internet" database of an organization may have to be manually entered into the corresponding "intranet" database, then manually entered into a third verification database. As is generally known, the entry of data is time-consuming and inexact, *e.g.,* any digit in the credit card number may be incorrectly typed each time the credit card number is manually entered.

In order to eliminate redundancy, an organization can make use of an electronic commerce architecture which uses firewalls, or similar security structures, to protect the security of an intranet network system while enabling secure transactions to be performed across the firewall by an external customer/ sets of hardware. A firewall, or similar structure, generally includes software and/or hardware that protects the intranet system and its associated applications from unauthorized external access.

Many firewalls include proxy servers or, more generally, proxies, which filter requests made to the secure servers and databases such that data and commands sent to the secure servers and databases from the external customer are monitored, to ensure that data and commands which are forwarded to the secure servers and databases are appropriate for the secure servers and databases. Unfortunately, current digital electronic payment systems which are used for performing transactions on the Internet generally cannot be used with network systems which utilize proxy servers. By way of example, commonly used digital payment systems generally do not include software which supports the use of proxies. As such, organizations which use firewalls that include proxies cannot easily make use of digital payment systems.

In order for organizations which use firewalls that include proxies to use digital payment systems, these organizations can place relevant servers and databases outside of the firewall. This, however, can compromise security and is therefore an undesirable solution for most organizations. Alternatively, the organizations can remove proxies from firewalls such that digital payment systems can be implemented. Removing proxies tends to be an undesirable solution as reconfiguring firewalls can prove to be time-consuming, and, further, removing proxies can also compromise security.

Therefore, what is desired is an architecture which enables an organization to use systems which do not support proxies, *e.g.,* digital payment systems, while maintaining firewalls that include proxies, without compromising the security of the organization's servers and databases.

### SUMMARY OF THE INVENTION

The present invention provides methods, software, and an apparatus for allowing secure transactions to be made through a firewall on a computer network. According to one aspect of the present invention, an electronic data transfer system for transmitting a message between a first computer system, arranged within a firewall, and a second computer system which is in communication with the first computer system across a computer network includes a translator mechanism which is effective to identify messages that are encoded in a first format that is suitable for transmission across the network. As this first format, while suitable for transmission across the network, is not suitable for transmission across the firewall, the translator is further arranged to convert messages into a second format that is effective to be transmitted across the firewall. In one embodiment, the translator mechanism includes a first interceptor mechanism arranged within the firewall, and a second interceptor

In another aspect of the present invention, an electronic data transfer system for mechanism arranged outside of the firewall. transmitting a message between a first computer system located on a first side of a firewall and a second computer system located on a second side of the firewall includes a first interceptor mechanism arranged on the first side of the firewall and a second interceptor mechanism arranged on the second side of the firewall. The first interceptor mechanism is configured to identify a selected message of a first format that is transmitted from the first computer system and to translate the selected message into a second format that is effective to be transmitted across the firewall. The second interceptor mechanism is arranged on the second side of the firewall, and is in communication across the firewall with the first interceptor mechanism. The second interceptor mechanism is also arranged to identify the translated selected messaged and to convert the translated selected message back into the first format.

### BRIEF DESCRIPTION OF THE DRAWINGS

The invention, together with further advantages thereof, may best be understood by reference to the following description taken in conjunction with the accompanying drawings in which:

Figure 1a is a diagrammatic representation of a conventional intranet system.

Figure 1b is a diagrammatic representation of a conventional Internet system and a conventional intranet system.

Figure 2 is a diagrammatic representation of an interface between the Internet and an intranet system.

Figure 3 is a diagrammatic representation of the interface between a customer and a server complex in accordance with one embodiment of the present invention.

Figure 4a is a diagrammatic representation of the interface between a customer, a server complex, and an external transaction server in accordance with an embodiment of the present invention.

Figure 4b is a diagrammatic representation of an electronic commerce payment system interface which has a server that is external to a firewall in accordance with an embodiment of the present invention.

Figure 5 is a process flow diagram which illustrates the steps associated with sending a transaction across a firewall in accordance with an embodiment of the present invention.

Figure 6 is a process flow diagram which illustrates the steps associated with intercepting a transaction message in accordance with an embodiment of the present invention.

Figure 7 is a process flow diagram which illustrates the steps associated with intercepting a translated transaction message will be described in accordance with an embodiment of the present invention.

Figure 8 is a diagrammatic representation of the interface between a customer and an order entry and processing system in accordance with an embodiment of the present invention.

Figure 9 is a diagrammatic illustration of a typical computer system in accordance with the present invention.

### DETAILED DESCRIPTION OF THE DRAWINGS

Certain embodiments of a method and apparatus for eliminating the distinction between Internet commerce systems and intranet commerce systems in accordance with the present invention will be described below making reference to the accompanying drawings.

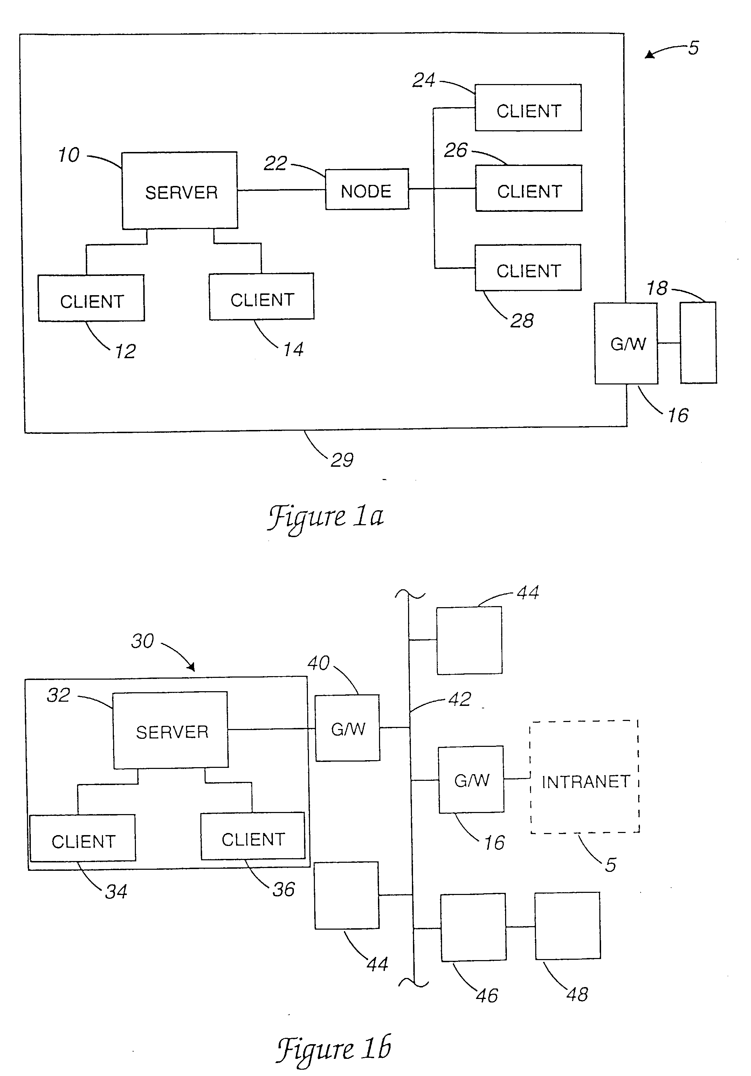

Figure 1a is a diagrammatic example of an intranet system. An intranet system 5 includes an intranet server 10 which can contain services, *e.g.,* applications, or which may have access to services housed on associated application servers (not shown). The services on intranet server 10 are accessible to clients 12 and 14, which are considered to be the consumers of the services. Clients 12 and 14, as shown, may have direct connections to intranet server 10. Alternatively, a router, hub, or the like 22 receives a request from one client, *e.g.,* one of clients 24, 26, and 28, then forwards the request to intranet server 10.

A firewall 29 "surrounds" intranet system 5 to provide security for intranet system 5. Firewall 29 generally includes software and/or hardware that protects intranet system 5 and its associated applications from unauthorized external access, *e.g.,* access by a client located "outside" of intranet system 5. Firewall 29 can also serve to control, or otherwise monitor, access from users within intranet system 5 to resources that are external to intranet system 5. It should be appreciated that a client located "outside" of intranet system is generally "outside" of firewall 29, and is not protected by firewall 29. On the other hand, any software or hardware that is protected by firewall 29 is considered to be "inside"' firewall 29. In other words, as intranet system 5 is located inside firewall 29, firewall 29 filters access to applications contained within intranet system 5, and generally prevents such applications from being accessed by unauthorized external clients. In some embodiments, firewall 29 can include a network translator or a router.

A first gateway ("G/W") 16 in firewall 29 allows controlled access between intranet system 5 and any client or server located outside of intranet system 5. In other words, gateway 16 serves as a filter for information which is to be passed between intranet system 5 and clients which are external to intranet system 5. Gateway 16 may represent one or more layers of security; the actual number of layers of security is dependent upon the requirements of intranet system 5. As the number of security layers increases, the likelihood of a security breach, or unacceptable access, to intranet system 5 is typically reduced. The structure, function, materials, and operation of such firewalls and gateways will be familiar to those having skill in the computer science and networking arts.

It will be appreciated by those of skill in the computer science and networking arts that the diagrams of firewalls provided herein are purely illustrative of their protective function and do not necessarily represent any physical containment of the servers and/or clients protected by the firewall. Similarly, the gateways illustrated herein do not necessarily represent "doors" leading to and from systems protected by a firewall. Rather, such gateways represent systems and devices known to those of skill in the computer science and networking arts that allow the controlled passage of data across the firewall.

Through gateway 16, commands and data from an external client 18, *e.g.,* a client located on the Internet, using selected protocols and having selected content may pass through firewall 29 to gain access to applications within intranet system 5. The selected protocols are generally read protocols, due to the fact that allowing external client 18 to view applications within intranet system 5 generally poses a relatively low security risk to the protected information within the firewall. Some protocols, such as HyperText Transfer Protocols (http), are considered to be relatively safe. Conversely, protocols that enable external client 18 to modify applications within intranet system 5 tend to pose a higher security risk to the data stored on intranet system 5. Gateway 16 also serves to enable clients internal to intranet system 5, as for example client 12, to access applications external to firewall 29 *(e.g.,* other sites on the Internet).

Figure 1b is a diagrammatic representation of an interface between an external computer network 30 system and an intranet. External computer network 30 is one of many systems which comprise "the Internet," and, hence, represents a single Internet node. A given server 32 on an external computer network 30 contains services which may be requested by clients 34 and 36 located on the external computer network. In general, the Internet is comprised of a plurality of Internet systems, each of which may be an intranet system in some environment, connected together by gateways, as for example a first gateway (G/W) 16 and a second gateway 40. Hence, from the point of view of any one intranet system, for example intranet system 5, external computer networks are regarded as part of the Internet.

Through second gateway 40, server 32 is connected to an Internet backbone 42, which is connected to a series of gateways and associated servers, *e.g.,* gateway 46 and server 48 and, in some instances, may be connected directly to other servers such as shown at 44. Internet backbone 42 serves as a "pipeline" which facilitates gateway-to-gateway interchanges on the Internet. That is, Intemet backbone 42 facilitates interchanges between different systems on the Internet. As shown, intranet system 5, through first gateway 16, is connected to backbone 42. A connection between first gateway 16 and second gateway 40, which occurs over backbone 42, is in essence a pipeline over which data may flow, via gateways 16 and 40, between Internet system 30 and intranet 5.

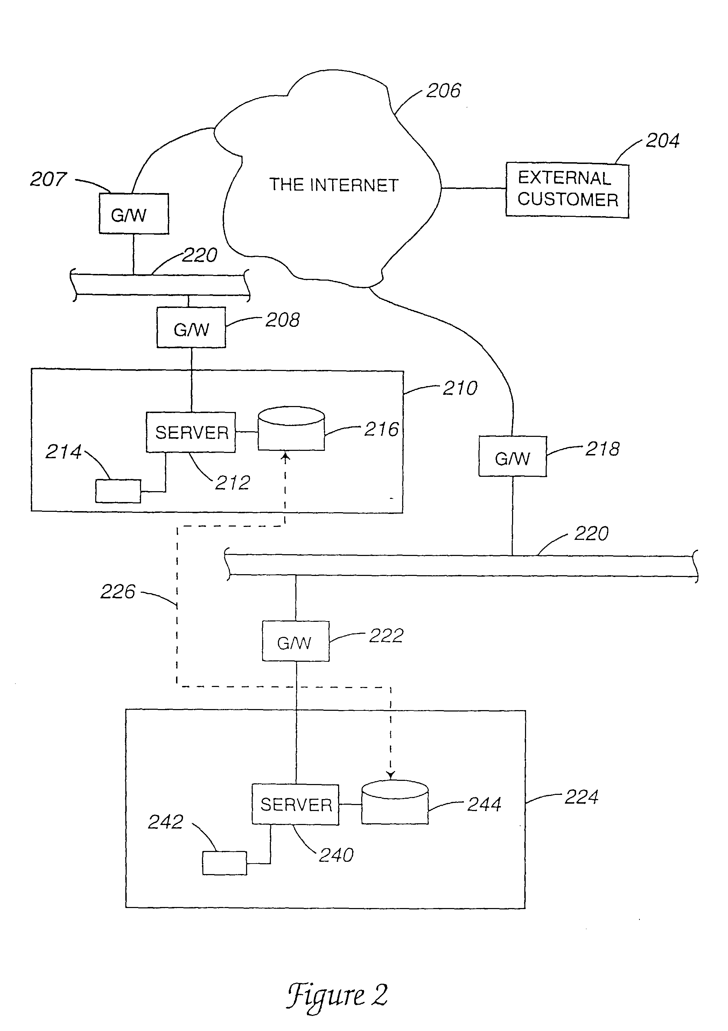

With reference to Figure 2, the general flow of data between an external customer, *e.g.*, a user outside of the intranet who desires to complete a transaction or exchange of data with a server inside an intranet, will be described in accordance with an embodiment of the present invention. An external customer 204, who has access to the Internet 206, makes a request to access an Internet system 210, which, in the described embodiment, includes an Internet server 212, an application server 214 which is connected to Internet server 212, and a database 216 which is also connected to Internet server 212. Application server 214 generally contains source code and binaries, while database 216 contains data which may be used by applications housed on application server 214. Intemet system 210 is interfaced with the Intemet 206 through a gateway 207 between Internet backbone 220 and Internet 206, and a gateway 208 between Internet system 210 and backbone 220.

The data stored on database 244 of intranet system 224 corresponds to at least a portion of the data stored on database 216 of Internet system 210. As previously described, an organization may wish to utilize an intranet system for internal use and an Intemet system for use by customers on the Internet. Hence, Internet system 210 is the Internet equivalent of intranet system 224 and essentially mirrors at least a portion of the functions of the intranet system. Intranet system 224 includes an intranet server 240, an application server 242, and a database 244. Database 244 and database 216 are, generally, redundant databases: that is, databases 244 and 216 are intended to contain the same information. Database 224 is intended for use on the intranet and database 216 is intended for use on the Internet. Similarly, a given application on application server 242 is intended to run on intranet system 224, whereas the same application on application server 214 is intended to run on Internet system 210. Intranet system 224 is connected via a gateway 222 to backbone 220. A gateway 218 connects backbone 220 to the intended process on Internet 206.

During an electronic commerce process, external customer 204 makes a request across Internet 206 which is intended for Internet system 210, through gateway 207. The request may be a request to retrieve data from database 216 of Internet system 210. Alternatively, for a typical electronic commerce process, the request may be a request to place an order for a product, in which case the external customer provides transaction information such as identifying the good or service to be purchased and various payment and personal information. If the request is of a proper protocol to pass through the levels of security of gateway 207, then the request is routed over backbone 220 to gateway 208 of Internet system 210. If the request is appropriate to be processed by Internet system 210, then the request is processed, and database 216 is updated accordingly.

Updating database 216, however, does not automatically result in the updating of database 244, which updating is required for processing the external customer's request to thereby complete the transaction. A secondary process, represented by line 226, is required to update database 244 in view of changes made to database 216, and vice versa. In general, the secondary process is either a script which needs to be manually run to update database 244 to correspond to database 216, or the secondary process involves the manual entry of updated data from database 216 into database 244 to update database 244. A similar process is also required to update database 216 in the event that database 244 is updated by an intranet user.

In one embodiment of the present invention, the need to update redundant databases is eliminated through the use of an electronic commerce architecture which enables secure transactions to be made across a firewall. With reference to Figure 2 and as described further herein, such an electronic commerce architecture allows secure transactions to be made across a firewall and thereby essentially eliminates the need for a second data entry and storage system, such as Internet system 210, as redundant with respect to intranet system 224.

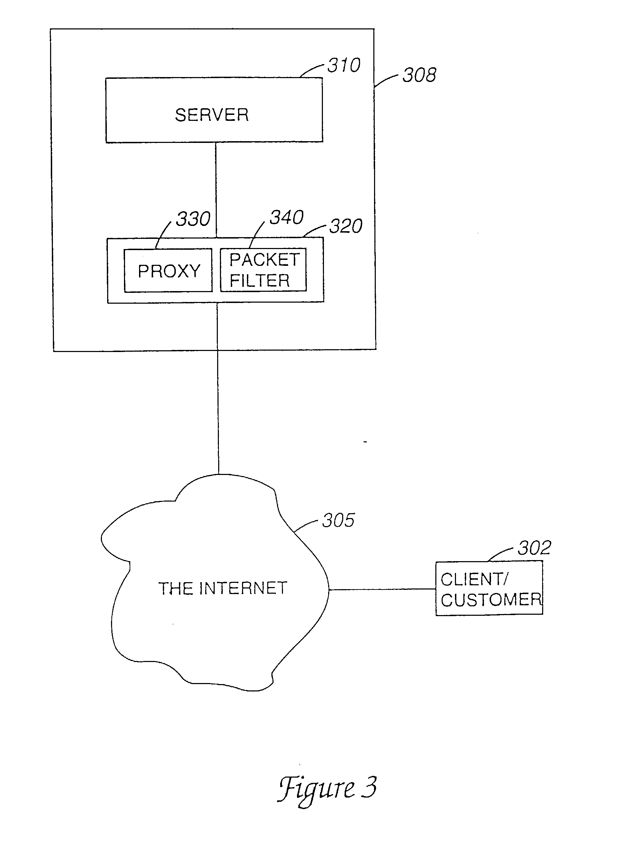

Figure 3 is a diagrammatic representation of the interface, through a firewall, between a customer and a server complex in accordance with one embodiment of the present invention. When a customer 302, or an external client, who is linked to the Internet 305, wishes to access an application that is housed on a server which can be a part of an intranet system, *e.g.,* server 310, customer 302 must access the server through the Intemet 305. Server computer 310, which is housed within a server complex 308, contains services, or applications, which can have access to services housed on associated application servers.

Server complex 308 further includes a firewall 320 which, as previously described, typically includes software and/or hardware that protects server 310 and applications associated with server 310 from unauthorized external access. In one embodiment in accordance with the present invention, firewall 320 generally includes a proxy server 330 and a packet filter 340. Proxy server 330 monitors activities which involve requests to access server 310 and can control access to server 310. It should be appreciated that in some embodiments, while proxy server 330 can be "external" to firewall 320, proxy server 330 will still interface with firewall 320, *e.g.*, proxy server 330 can be "positioned" between server 310 and firewall 320. Server complex 308 is linked to the Internet 305 through firewall 320. In some embodiments, server complex 308 has more than one associated proxy server 330. In general, transactions which occur between the Internet 305 and server 310 pass through firewall 320. The construction, configuration, and use of proxies and proxy servers will be familiar to those of skill in the computer science and networking arts.

Many application systems support proxy servers, as for example proxy server 330, and can therefore send messages and data that can traverse firewall 320. However, many other systems, including presently available digital electronic commerce transaction systems such as CyberCash (available commercially from CyberCash, Inc. of Reston, VA, USA), Ecash (available commercially from DigiCash of Amsterdam, The Netherlands), Mondex (available commercially from Mondex Intemational, Limited of London, England) and Millicent (available commercially from Digital Equipment Corporation of Maynard, MA, USA), are not capable of transmitting or receiving data that is formatted to traverse firewalls. Therefore, according to one embodiment of the present invention, "interceptor mechanisms" are used to enable transactions to be made across firewall 320. As described herein and below, in one embodiment, the interceptor mechanisms, also referred to as interceptors or interceptor agents, of the present invention include a first interceptor mechanism that is arranged within the firewall, which first interceptor mechanism is configured to intercept communications not configured to traverse the firewall and to convert the intercepted communication into a format which can traverse a firewall. A second interceptor mechanism is arranged outside of the firewall and is configured to convert the transmitted converted communication back to its original format for forwarding to its next destination, as will be discussed below. In one more particular embodiment, the communications include transaction data used in a digital electronic commerce electronic transaction system, such as one of the above-listed commercially-available digital commerce systems.

It should be appreciated that although the use of interceptor mechanisms is described as being used to enable transactions to traverse a firewall, or similar structure, these interceptor mechanisms can generally be used to facilitate the traversal of any message which has permission to traverse the firewall, *e.g.,* any message which does is not a risk to the security of a system protected by the firewall. By way of example, if a message that is known not to compromise the security of a system protected by a firewall, but the message cannot cross the firewall due to unacceptable formatting, *e.g.,* a configuration that is not arranged to traverse the firewall, then the message can be intercepted and translated by a first interceptor mechanism, passed across the firewall, and intercepted and reformatted into its original format by a second interceptor mechanism. In general, such messages can include, but are not limited to, informational transactions.

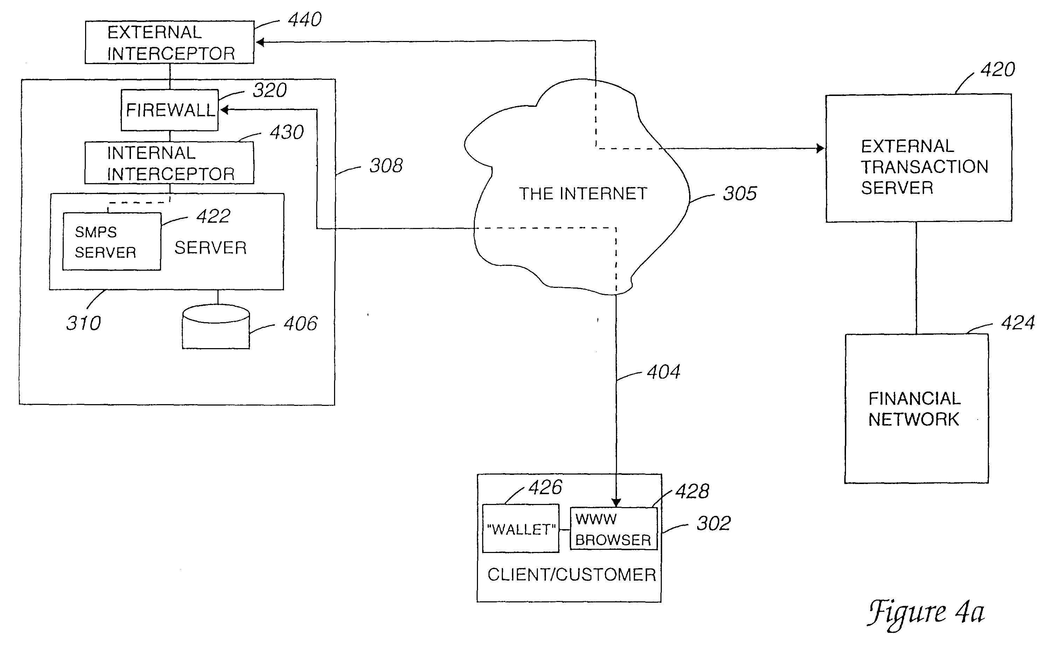

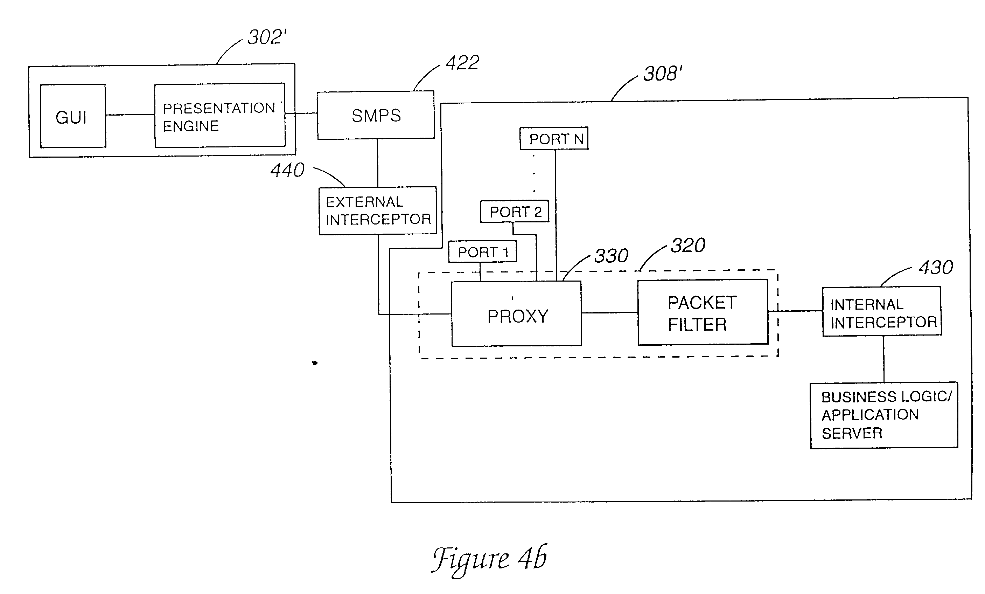

Figure 4a is a diagrammatic representation of the interface between a customer, a server complex, and an external transaction server in accordance with an embodiment of the present invention. Although external transaction server can be any suitable transaction server, in the described embodiment, the external transaction server is a commercial transaction server which can be accessed by, and has access to, a financial institution, *e.g.*, a bank.

According to the illustrated, demonstrative embodiment, customer 302 requests a connection to server 310, through an Intemet connection 404. In general, customer 302 uses a graphical user interface or a World Wide Web browser 428, as for example a browser such as HotJava™ (available commercially from Sun Microsystems of Mountain View, California, USA) to access information on the World Wide Web, and, more particularly, to access an application which is housed on server 310. It should be appreciated that the request by customer 302 for a connection to server 310 typically must first pass through firewall 320. In the described embodiment, the application accessed by customer 302 is used to perform a transaction, *e.g.,* a cash transaction. For cash transactions, customer 302 can include a "wallet" 426 that can be used to enter financial information which pertains to the amount of cash and credit that is available to customer 302. Server 310 is generally linked to a database, as for example a customer transaction database 406, which includes information that is relevant to the transaction. Server 310 can also be associated with a World Wide Web server.

A transaction performed across the Internet 305 generally involves a link between server complex 308 and an external transaction server 420. In some embodiments, as for example in an embodiment which uses CyberCash, server 310 is associated with a Secure Merchant Payment System (SMPS) 422 which, among other functions, conducts transactions between server 310 and external transaction server 420. That is, SMPS 422 sends cash transaction, *e.g.,* payment, messages to external transaction server 420. Typically, such an external transaction server 420 has a Domain Name Service (DNS) address such as "payl.cybercash.com," and has access to a financial network 424 that maintains financial records associated with customer 302. Although SMPS 422 is shown as being within firewall 320, SMPS 422 can also be outside of firewall 320, as will be described below with reference to Figure 4b.

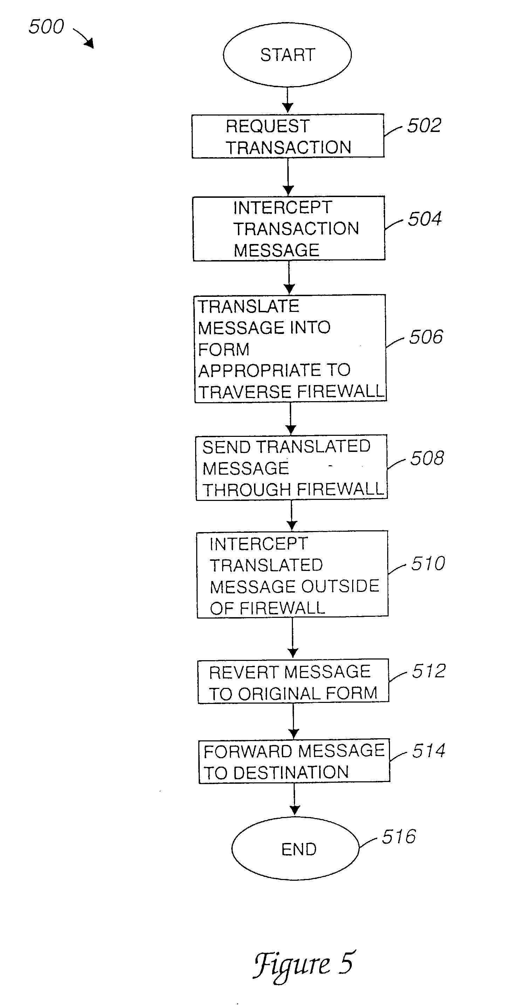

According to one embodiment of the present invention, a first interceptor mechanism that is contained within firewall 320, and a second interceptor mechanism 440 that is external to firewall 320, are combined to enable transaction messages to be transmitted across firewall 320. More particularly, internal interceptor mechanism 430 converts transaction messages into a format suitable for transfer across firewall 320, while external interceptor mechanism 440 converts the transferred messages back into their original format. Internal interceptor mechanism 430 and external interceptor mechanism 440 will be described in more detail below with respect to Figures 5, 6, and 7. It should be appreciated that in some embodiments, when return messages are sent from external transaction server 420 to server 310, external interceptor mechanism 440 can convert return transaction messages into a format suitable for transfer across firewall 320, while internal interceptor mechanism 440 receives converts the return transferred messages back into their original format.

Referring next to Figure 4b, an electronic commerce payment system interface which has a server that is external to a firewall will be described in accordance with an embodiment of the present invention. In the described embodiment, the electronic payment system functions in accordance with the commercially available CyberCash system, although any other suitable electronic payment system can be used. By way of example, other suitable payment systems include, but are not limited to, Ecash and Millicent.

A server complex 308' includes a firewall 406 which, in the described embodiment, includes a proxy 330. Internal interceptor 430 is located on one side of firewall 320, while external interceptor 440 is located outside of firewall 320, as in a customer 302'. As shown, SMPS 422 is located external to firewall 320 and server complex 308', and is therefore able to send transaction, or payment, messages directly to an external transaction server, as for example external transaction server 420 (as shown in Figure 4a). In some embodiments, a World Wide Web server that is associated with SMPS 422 can also be external to firewall 320, and serves to receive return payment messages from external transaction server 420 and passes the return payment messages to SMPS 422.

When return transaction messages are sent to SMPS 422, any sensitive customer and financial data contained in the messages must be written back through firewall 320 into server complex 308. Other suitable methods include intercepting messages inside firewall 320 that are transferred over ports, as will be understood by those skilled in the art.

Figure 5 is a process flow diagram which illustrates the steps associated with sending a transaction across a firewall in accordance with an embodiment of the present invention. The process of sending a transaction across a firewall 500 begins, and in a step 502, the transaction is requested. In general, the transaction is requested by an application which is accessed by an external customer, *e.g.,* using a Web browser. By way of example, a customer may access an application which enables him or her to purchase goods or services. The purchase of goods can then require a payment transaction such as a credit transaction or a cash transaction. It should be appreciated that a request for a transaction typically entails sending a transaction message between the server on which the application is housed, and an external transaction server. Such messages may further be encrypted as will be familiar to those of skill in the computer security arts. However, the methods and apparatus described herein are contemplated to function with any communications, whether encrypted or not.

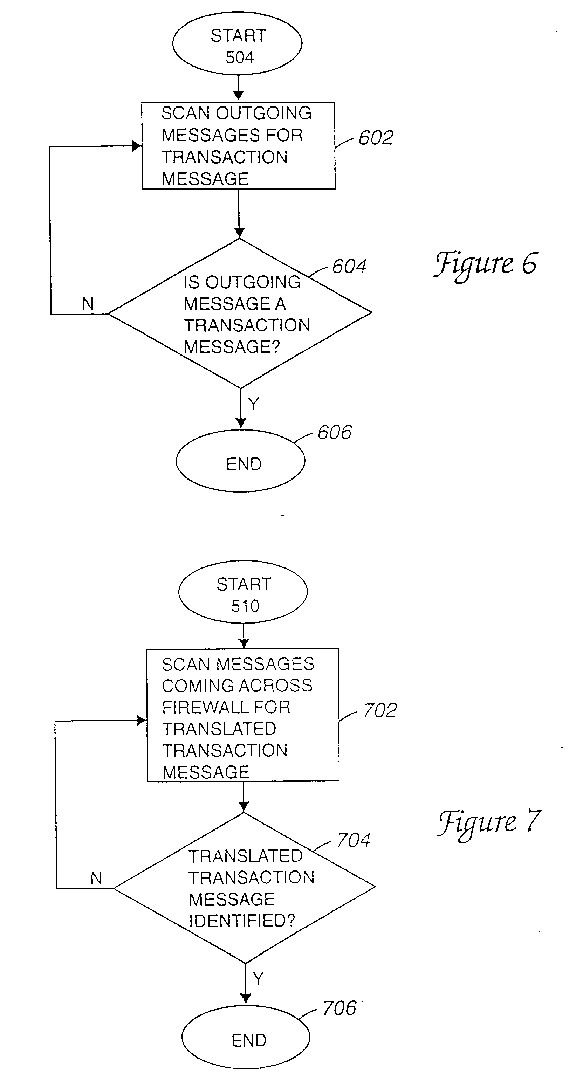

Once a transaction message or request is sent in step 502, the transaction message is intercepted by the first (internal) interceptor mechanism, *e.g.,* an interceptor daemon, in a step 504. In one embodiment, the internal interceptor is arranged to intercept transaction messages which are intended to be transmitted across a firewall. One suitable method of intercepting a transaction message will be described in more detail below with respect to Figure 6. After the transaction message is intercepted, the message is translated into a format that is appropriate for traversing the firewall in a step 506. While the message may be translated into any suitable format for transmission across a firewall, the suitable format is generally a format that is appropriate for the port over which the message is to be transmitted. By way of example, a HyperText Transfer Protocol (http) format may be suitable for transmitting messages over port 80. Further, http formats may also be suitable for transmitting messages over other ports, *e.g.,* port 8080. On the other hand, if a Secure Mail Transfer Protocol (SMTP) format is desired, then port 25 may be a suitable port for use in transmitting the message. It should be appreciated that suitable message formats can be widely varied and, as a result, the ports over which a message is to be transmitted can also vary. The formatting for passing messages across a firewall will be familiar to those of skill in the computer science and networking arts.

In a step 508, the translated message is passed through the firewall. Once the translated message is passed through the firewall, the translated message is intercepted by a second interceptor agent which is external to the firewall in a step 510. The steps associated with intercepting the translated message will be described below with reference to Figure 7. After the translated message is intercepted, process flow proceeds to a step 512 in which the translated message is "re-translated," or otherwise converted, back to the original form of the message. That is, the original transaction message is obtained, or extracted, from the translated message. In a step 514, the translated message is forwarded to the intended destination, or the target of the transaction request. By way of example, if the transaction is a cash transaction, then the intended destination may be a server which is associated with a digital payment system that can be accessed by a financial institution. After the transaction message is forwarded to the intended destination, the process of sending a transaction across a firewall is completed at 516.

Referring next to Figure 6, the steps associated with intercepting a transaction message will be described in accordance with an embodiment of the present invention. In other words, step 504 of Figure 5 will be described. The process of intercepting a transaction message begins, and in a step 602, outgoing messages, or messages which are to be sent across a firewall, are scanned or otherwise analyzed to identify a transaction message (or any message otherwise not configured to be passed across the firewall, but which does not violate any of the firewall's security measures). In one embodiment, the messages are scanned by an internal interceptor, or a message interceptor that is internal to the firewall over which transaction messages are to be sent.

For each outgoing message that is identified, in a step 604, a determination is made regarding whether the outgoing message is a transaction message. It should be appreciated that although any suitable method can be used to identify whether a message is a transaction message, as messages typically include message headers, suitable methods that are used to identify transaction methods generally include, but are not limited to, methods which involve parsing of searching a message header for transaction message identifiers.

If it is determined in step 604 that a message is not a transaction message, then process flow returns to step 602 in which outgoing messages are scanned for transaction messages. If it is determined that a message is a transaction message, then the process of intercepting a transaction message is completed at 606. In one embodiment, outgoing messages are continually scanned for transaction messages, and when a transaction message is identified, the identified transaction message is processed, as described above with reference to Figure 5, while the scanning process for transaction messages continues. In other words, the scanning process can run continuously.

With respect to Figure 7, the steps associated with intercepting a translated transaction message that has traversed the firewall will be described in accordance with an embodiment of the present invention. In other words, step 510 of Figure 5 will be discussed. The process of intercepting a translated transaction message begins, and in a step 702, messages which have been transmitted across a firewall are received and scanned in order to identify a translated transaction message. In one embodiment, the messages are scanned by an external interceptor, or a message interceptor that is external to the firewall over which the translated transaction messages were sent.

For each message that is identified, a determination is made in a step 704 regarding whether the message is a translated transaction message. It should be appreciated that although any suitable method can be used to identify whether a message is a translated transaction message, suitable methods include, but are not limited to, methods which involve parsing or searching message headers associated with messages for characters which identify messages associated with transactions. Such methods will be familiar to those having skill in the computer science arts. If it is determined in step 704 that a message is not a translated transaction message, then process flow returns to step 702 in which messages transmitted across the firewall are scanned for translated transaction messages. If it is determined that a message is a translated transaction message, then the process of intercepting a translated transaction message is completed at 706.

It should be appreciated that while only the process of sending a transaction request to an external transaction server has been described, the reverse process, *i.e.,* the process of sending a return message from an external transaction server, often does not require a conversion, as return messages are typically transmitted using standard http formats over ports, *e.g.,* port 80, and thus can pass through firewalls. However, for embodiments in which a return message needs translation in order to pass through firewalls, the process of sending a return message entails the same procedures as described herein with respect to the process of sending a transaction request from within the firewall to an external destination. In such embodiments, the return message is intercepted outside the firewall, translated, passed through the firewall, and intercepted inside the firewall, where the translated return message is re-translated back into the original format of the return message.

The transparent interface across firewalls provided by the use of interceptors generally enables transparent links to be made between different servers, as for example transactions made between an SMPS server inside a firewall and an external transaction server, as previously described, without compromising the security of servers and database located within the firewall. It should be appreciated that such transparent links can be used in conjunction with any number of applications. In general, the use of transparent links makes it possible to create seamless, real-time information and commerce-related business processes. That is, transparent links enable a cohesive integration of business processes.

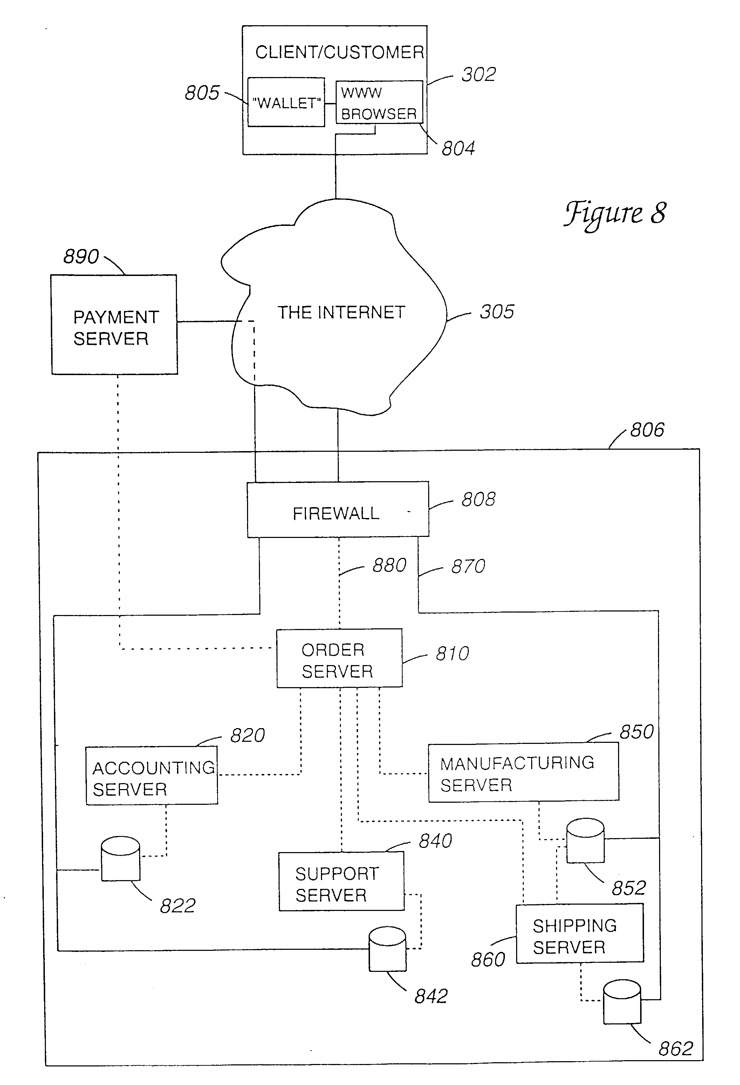

By way of example, transparent links can be used in the creation of an integrated order entry and order processing system. Such a system enables an order, entered by a customer with access to the Internet, for goods or services provided by an organization, to be transmitted across a firewall associated with the organization. This order could then be routed directly to relevant databases, as for example an accounting database, a product support database, a manufacturing database, and a shipping database, as will be described below with respect to Figure 8. By directly routing the order to relevant databases, *e.g.*, eliminating the need to access various servers associated with the databases, the delays that are typically associated with transaction processing can be avoided, and real-time order processing can therefore be achieved.

Figure 8 is a diagrammatic representation of the interface between a customer and an order entry and processing system in accordance with an embodiment of the present invention. Customer 302, who has access to any suitable browser 804, as for example a HotJava™ browser, can use browser 804 to access the Internet 305 to enter an order for goods and services. Customer 302 also has access to a "wallet" 805 which can be used to enter, through browser 804, personal and credit card information. The order is then forwarded to a server complex 806 associated with the organization from which goods and services are ordered. Server complex 806 includes a firewall 808 which, in the described embodiment, is associated with an internal interceptor and an external interceptor, as described above with respect to Figures 4a and 4b, that enables transactions to transparently traverse firewall 808.

The transparent traversal of firewall 808 enables databases that are relevant to the order for goods and services to be accessed directly, as indicated by solid lines, *e.g.,* solid line 870, within server complex 806. A message, or a transaction, can be sent directly from firewall 808 to, for example, an accounting database 822 arranged to hold accounts payable information, a support database 842 arranged to hold product and customer information for support services, a manufacturing database 852 arranged to hold product inventory information, and a shipping database 862 arranged to hold customer information that is relevant to shipping products. It should be appreciated that in the described embodiment, a digital payment system 890, *e.g.,* CyberCash, can also transparently interface with accounting server 822, through firewall 808. The ability to directly access databases from firewall 808 facilitates real-time order processing.

It should be appreciated that in some embodiments, a central server can be used to access databases, as for example accounting database 822, from firewall 808. Such a centralized server can be considered to be a router for an order, and provides a centralized location into which an order is entered, while still enabling real-time order processing to occur.

In contrast, if transparent transactions are not enabled, the paths, which are indicated by dashed lines, as for example dashed line 880, in server complex 806, that an order follows is complex. An order server 810 is first accessed from firewall 808 in order to enter the order placed by customer 302. Then, separate servers are accessed, usually through manual entry, with information contained in order server 810. For example, pertinent information is entered into an accounting server 820 in order to access accounting database 822. Information is also entered into a support server 840 in order to access support database 842, a manufacturing server 850 to access manufacturing database 852, and a shipping server 860 in order to access shipping database 862. Shipping server 860 must further access manufacturing database 852 in order to determine if there is product available for shipment. Further, order server 810 would also have to separately access digital payment server 890. The need to enter an order into separate databases does not enable a cohesive integration of order entry and order processing systems to be achieved. On the other hand, using transparent links in accordance with an embodiment of the present invention, as described, enables integrated, real-time order entry and order processing systems to be implemented. Thus, the efficiency of electronic commerce systems can be improved.

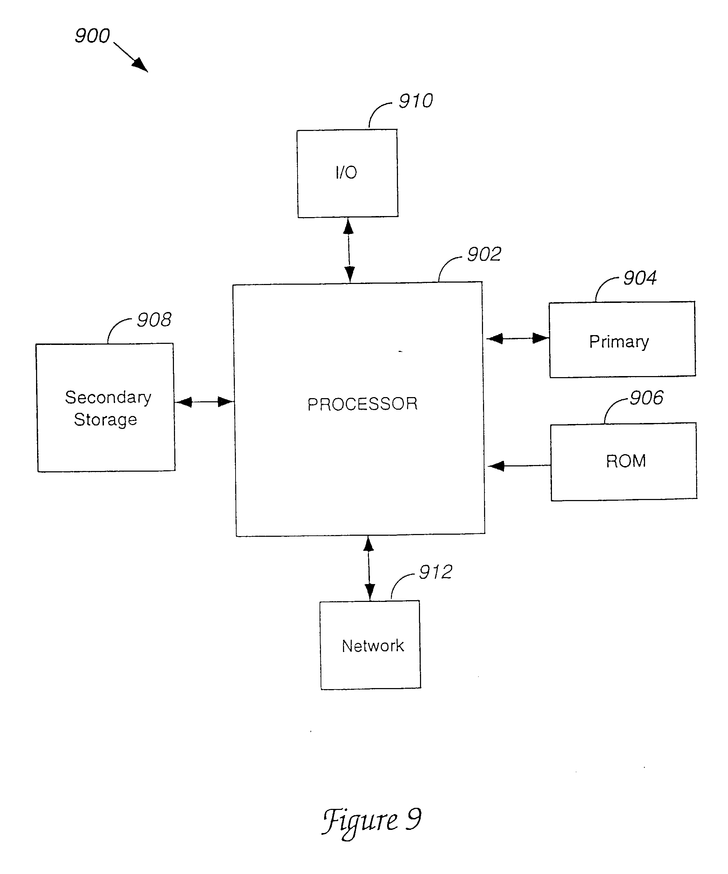

Figure 9 illustrates a typical computer system in accordance with the present invention. The computer system 900 includes any number of processors 902 (also referred to as central processing units, or CPUs) that is coupled to memory devices including primary storage devices 904 (typically a read only memory, or ROM) and primary storage devices 906 (typically a random access memory, or RAM). As is well known in the art, ROM 904 acts to transfer data and instructions uni-directionally to the CPU and RAM 906 is used typically to transfer data and instructions in a bi-directional manner. Both primary storage devices 904, 906 may include any suitable computer-readable media as described above. A mass memory device 908 is also coupled bidirectionally to CPU 902 and provides additional data storage capacity. The mass memory device 908 may be used to store programs, data and the like and is typically a secondary storage medium such as a hard disk that is slower than primary storage devices 904, 906. Mass memory storage device 908 may take the form of a magnetic or paper tape reader or some other well-known device. It will be appreciated that the information retained within the mass memory device 908, may, in appropriate cases, be incorporated in standard fashion as part of RAM 906 as virtual memory. A specific mass storage device such as a CD-ROM 914 may also pass data uni-directionally to the CPU.

CPU 902 is also coupled to one or more input/output devices 910 that may include, but are not limited to, devices such as video monitors, track balls, mice, keyboards, microphones, touch-sensitive displays, transducer card readers, magnetic or paper tape readers, tablets, styluses, voice or handwriting recognizers, or other well-known input devices such as, of course, other computers. Finally, CPU 902 optionally may be coupled to a computer or telecommunications network, *e.g.*, an Internet network or an intranet network, using a network connection as shown generally at 912. With such a network connection, it is contemplated that the CPU might receive information from the network, or might output information to the network in the course of performing the above-described method steps. The above-described devices and materials will be familiar to those of skill in the computer hardware and software arts.

Although only a few embodiments of the present invention have been described, it should be understood that the present invention may be embodied in many other specific forms without departing from the spirit or scope of the present invention. By way of example, the steps associated with intercepting transaction messages can be widely varied. Similarly, the steps associated with intercepting translated transaction messages can also be widely varied without departing from the spirit or the scope of the present invention.

Further, although the use of interceptor mechanisms has been described in terms of enabling transactions, or messages in general, to traverse a firewall, the interceptor mechanisms can also be used to facilitate the transmission of messages across routers, bridges, extranets, infranets, and many other similar mechanisms. In addition, a firewall can take on many different configurations without departing from the spirit or the scope of the present invention. Therefore, the present examples are to be considered as illustrative and not restrictive, and the invention is not to be limited to the details given herein, but may be modified within the scope of the appended claims.

## Claims

1. In a computer network comprising a first computer system arranged within a firewall, said first computer system being in communication with a second computer system on said network, an electronic data transfer system for transmitting a message between said first and said second computer systems, said message being in a first format suitable for transmission across said network, but not suitable for transmission across said firewall, said electronic data transfer system comprising a translator mechanism effective to identify messages encoded in said first format and convert said messages into a second format that is effective to be transmitted across said firewall.

2. The electronic data transfer system as recited in claim 1 wherein said translator mechanism comprises a first interceptor mechanism arranged within said firewall, said first interceptor mechanism being configured to translate a selected message in said first format sent from said first computer system into said second format that is appropriate for transmission across said firewall and forward said translated selected message across said firewall; and said first interceptor mechanism being in communication across said firewall with a second interceptor mechanism located outside of said firewall, said second interceptor mechanism being configured to identify said translated selected message encoded in said second format and convert said translated selected message into said first format and forward said converted selected message across said network to said second computer system.

3. The electronic data transfer system as recited in claim 1 wherein said translator mechanism comprises a first interceptor mechanism arranged outside of said firewall, said first interceptor mechanism being configured to translate a selected message in said first format sent from said second computer system into said second format that is appropriate for transmission across said firewall and forward said translated selected message across said firewall; and said first interceptor mechanism being in communication across said firewall with a second interceptor mechanism located within said firewall, said second interceptor mechanism being configured to identify said translated selected message encoded in said second format and convert said translated selected message into said first format and forward said converted selected message across said network to said first computer system.

4. The electronic data transfer system as recited in any one of the preceding claims wherein said message comprises electronic commercial transaction information.

5. The electronic data transfer system as recited in any one of the preceding claims wherein said first computer system is in communication with at least one database.

6. The electronic data transfer system as recited in claim 5 wherein said selected message includes information that is suitable for updating said at least one database, said electronic data transfer system further including a mechanism for forwarding said selected message to at least one selected database and updating said selected database.

7. The electronic data transfer system as recited in claim 5 wherein said database is associated with an electronic commercial transaction system, and said selected message comprises electronic commercial transaction information.

8. The electronic data transfer system as recited in one of claims 5 and 7 wherein said database is located inside of said firewall.

9. The electronic data transfer system as recited in one of claims 5 and 7 wherein said database is located outside of said firewall.

10. In a computer network comprising a first computer system arranged on a first side of a firewall, said first computer system being in communication with a second computer system on said network, said second computer system being arranged on a second side of said firewall, an electronic data transfer system for transmitting a message between said first and said second computer systems, said message being in a first format suitable for transmission across said network, but not suitable for transmission across said firewall, said electronic data transfer system comprising:
a first interceptor mechanism arranged on said first side of said firewall, said first interceptor mechanism being configured to identify a selected message transmitted from said first computer system, said selected message being in said first format, and to translate said selected message into a second format that is effective to be transmitted across said firewall; and
a second interceptor mechanism arranged on said second side of said firewall, said second interceptor mechanism being in communication across said firewall with said first interceptor mechanism, said second interceptor mechanism being configured to identify said translated selected message encoded in said second format and convert said translated selected message into said first format, said second interceptor mechanism further being configured to forward said selected message across said network to said second computer system.

11. The electronic data transfer system as recited in claim 10 wherein said first computer system is in communication with at least one database, and said selected message includes electronic commerce transaction information.

12. The electronic data transfer system as recited in claim 11 wherein said selected message includes information that is suitable for updating said database, said electronic data transfer system further including a mechanism for updating said database.

13. A computer-implemented method for transmitting messages between a first computer system arranged within a firewall and a second computer system outside of said firewall, said first computer system being coupled to said second computer system over a computer network, said method comprising:
generating a message in a first format, said first format being suitable for transmission across said computer network, but not suitable for transmission across said firewall;
intercepting said message;
translating said message into a second format, said second format being suitable for transmission across said firewall; and
transmitting said translated message across said firewall.

14. The computer-implemented method as recited in claim 13 wherein said step of generating said message is performed by said first computer system, said method further comprising:
intercepting said translated message;
converting said translated message into said first format; and
forwarding said converted message across said computer network to said second computer system.

15. The computer-implemented method as recited in one of claims 13 and 14 wherein said message includes electronic commerce transaction information, and said method further comprises forwarding said converted message across said computer network to a database associated with said second computer system and updating said database.

16. The computer-implemented method as recited in claim 13 wherein said message is generated by said second computer system, said method further comprising:
intercepting said translated message;
converting said translated message into said first format; and
forwarding said converted message across said computer network to said first computer system.

17. The computer-implemented method as recited in claim 16 wherein said message includes electronic commerce transaction information, and said method further includes forwarding said converted message across said computer network to a database associated with said first computer system and updating said database.

18. A computer-readable medium containing computer-readable program code devices for transmitting messages between a first computer system arranged within a firewall and a second computer system in communication with said first computer system through a computer network, said computer-readable medium comprising computer program code devices configured to cause a computer to execute the steps of:
intercepting a message generated in a first format, said first format being suitable for transmission across said computer network, but not suitable for transmission across said firewall;
translating said message into a second format, said second format being suitable for transmission across said firewall; and
transmitting said translated message across said firewall.
